# EUROPEAN PATENT APPLICATION

(11) **EP 1 729 061 A1**
(43) Date of publication of application: **06.12.2006**
(21) Application number: 04821741.8
(22) Date of filing: 08.12.2004
(51) Int. Cl.: F22B 1/28, F24C 1/00

(54) **STEAM GENERATOR AND STEAM COOKER MOUNTING IT**

(30) Priority: 18.03.2004 JP 2004078750
(71) Applicant: SHARP KABUSHIKI KAISHA, Osaka-shi, Osaka 545-8522 (JP)
(72) Inventor: YAMAGUCHI, Kiyoshi, 6391042 (JP); UEDA, Shinya, 6350013 (JP); KITAGUCHI, Yoshikazu, 5830842 (JP)
(74) Representative: Brown, Kenneth Richard
(86) International application number: PCT/JP2004/018248
(87) International publication number: WO 2005/090861

(57) **Abstract**

Steam generated by a steam generating device is fed, through an outer circulation passage, to a heating chamber. The steam generating device is provided with a barrel shape pot having a flat, elongate horizontal cross section, a steam generating heater arranged in a bottom part of the pot, and a steam suction portion that extends, above the pot, in a direction in which the steam suction portion crosses an axis line of the pot. The steam suction portion is built with a plurality of steam suction ejectors that are each formed to penetrate the pot from one flat side to an opposite flat side. The steam that has exited from the steam suction ejector flows through a duct into a sub-cavity provided adjacent to the heating chamber, then is heated by a vapor heating heater provided in the sub-cavity, and is then blown into the heating chamber.

## Description

### Technical Field

The present invention relates to a steam generating device and a steam cooking apparatus provided therewith.

### Background Art

To date, various proposals have been made in the field of steam cooking apparatuses that perform cooking by use of steam. Examples of such steam cooking apparatuses are seen in Patent Documents 1 to 3 listed below. Patent Document 1 discloses a steam cooking apparatus wherein steam is jetted into food trays. Patent Document 2 discloses a cooking apparatus wherein superheated steam is blown into an oven chamber, or steam inside the oven chamber is turned into superheated steam by being radiation-heated. Patent Document 3 discloses a cooking apparatus wherein superheated steam is supplied to inside an entire heating chamber, or to around food, or to both.
Patent Document 1: JP-U1-H3-67902 (pp. 4-6 of the whole-text specification, and FIGS. 1-3)
Patent Document 2: JP-A-H8-49854 (pp. 2-3, and FIGS. 1-7)
Patent Document 3: JP-A-H11-141881 (pp. 3-5, and FIGS. 1-3)

### Disclosure of the Invention

### Problems to be Solved by the Invention

According to where the steam generating device is placed, steam cooking apparatuses are classified into an exterior steam generator-type and a built-in steam generator-type. The apparatus disclosed in Patent Document 1 adopts an exterior steam generator-type, and the apparatuses disclosed in Patent Documents 2 and 3 adopt a built-in steam generator-type. The exterior steam generator-type permits the use of a steam generating device that is large in size and thus offers higher steam generating performance. Undesirably, however, this makes the apparatus as a whole unduly large, and, therefore, the apparatus becomes not suitable for domestic use.

It is an object of the present invention to provide a small-sized and high-performance steam generating device on the assumption that it is placed inside a steam cooking apparatus. It is another object of the present invention to provide a compact and high-performance steam cooking apparatus provided with such a steam generating device.

### Means for Solving the Problem

To achieve the above object, according to one aspect of the present invention, a steam generating device is provided with:
(a) a barrel shape pot having a flat, elongate horizontal cross section;
(b) a heater arranged in a bottom part of the pot; and
(c) a steam suction portion that extends, above the pot, in a direction in which the steam suction portion crosses an axis line of the pot, and that occupies a space having a flat vertical cross-sectional shape.

According to this construction, the pot has a barrel shape with a flat, elongate horizontal cross section. Thus, when arranging a heater within a given area, as compared with when a heater is placed inside a pot having a circular horizontal cross section, placing a heater inside a pot having a barrel shape with a flat, elongate horizontal cross section permits the heater to be longer. This makes it possible to use more electric power and thereby to increase evaporation. Moreover, the steam suction portion provided above the pot occupies a space having a flat vertical cross-sectional shape, and covers a wide area. This permits the steam suction portion to suck in the generated steam evenly.

According to the present invention, in the steam generating device constructed as described above, the heater is built with a sheath heater that is immersed in water inside the pot.

With this construction, water inside the pot is heated with the sheath heater immersed therein and hence with high heating efficiency. This helps enhance the ratio of the steam generating performance to the amount of energy consumed.

According to the present invention, in the steam generating device constructed as described above, the steam suction portion is built with a plurality of steam suction ejectors that are each formed to penetrate the pot from one flat side to an opposite flat side.

With this construction, the steam suction portion is built with a plurality of steam suction ejectors. Thus, the area where suction of steam takes place can be increased, and the steam can be sucked quickly.

According to the present invention, in the steam generating device constructed as described above, the plurality of steam suction ejectors are arranged side by side at the same level.

With this construction, even in a case where there is no ample space in the height direction, a large amount of steam can be transported.

To achieve the above object, according to another aspect of the present invention, a steam cooking apparatus is provided with:
(a) a heating chamber in which food is placed;
(b) an outer circulation passage through which gas inside the heating chamber is sucked in and is then returned to the heating chamber; and
(c) the steam generating device constructed as described above that feeds steam, through the steam suction portion, to the outer circulation passage.

With this construction, even in a case where there is a limit to the electric power consumption, it is possible to provide a sufficient amount of steam to perform cooking.

According to the present invention, in the steam cooking apparatus constructed described above, the steam generating device has the steam suction portion built with a plurality of steam suction ejectors that are each formed to penetrate the pot from one flat side to the opposite flat side. Here, the outer circulation passage divides into a plurality of paths through the corresponding steam suction ejectors.

With this construction, since a plurality of steam suction ejectors are provided, the outer circulation passage is divided into a plurality of paths through the corresponding steam suction ejectors. Thus, the pressure loss across the paths is reduced, the amount of steam circulated can be increased, and the steam can be quickly mixed with the gas flowing through the outer circulation passage.

According to the present invention, in the steam cooking apparatus constructed as described above, the steam generating device is the steam generating device having the steam suction portion built with a plurality of steam suction ejectors that are each formed to penetrate the pot from one flat side to the opposite flat side, the plurality of steam suction ejectors being arranged side by side at the same level. Here, the outer circulation passage divides into a plurality of paths through the corresponding steam suction ejectors.

With this construction, since a plurality of steam suction ejector are provided, the outer circulation passage is divided into a plurality of paths through the corresponding steam suction ejectors. Thus, the pressure loss across the paths is reduced, the amount of steam circulated can be increased, and the steam can be quickly mixed with the gas flowing through the outer circulation passage.

According to the present invention, in the steam cooking apparatus constructed as described above, the steam generating device is arranged with one flat side of the pot parallel to a side wall of the heating chamber.

With this construction, the steam generating device does not occupy an unduly large space inside the cabinet of the steam cooking apparatus; thus, the space inside the cabinet can be used more efficiently.

According to the present invention, in the steam cooking apparatus constructed as described above, the outer circulation passage is connected to a sub-cavity provided adjacent to the heating chamber, and the steam flowing through the outer circulation passage into the sub-cavity is heated by heating means provided in the sub-cavity, and is then fed to the heating chamber.

With this construction, since the steam flowing through the outer circulation passage into the sub-cavity is heated by the heating means provided in the sub-cavity, and is then fed to the heating chamber, the temperature of the steam used for cooking can be easily controlled. For example, it is possible to heat the steam until it turns into superheated steam so as to perform cooking by use of it.

### Advantages of the Invention

According to the present invention, a steam generating device is provided with a pot having a barrel shape with a flat, elongate horizontal cross section, a heater arranged in a bottom part of the pot, and a steam suction portion that extends, above the pot, in a direction in which the steam suction portion crosses an axis line of the pot, and that occupies a space having a flat vertical cross-sectional shape. Thus, when arranging a heater within a given area, as compared with when a heater is placed inside a pot having a circular horizontal cross section, placing a heater inside a pot having a barrel shape with a flat, elongate horizontal cross section permits the heater to be longer. This makes it possible to use more electric power and thereby to increase evaporation. Moreover, the steam suction portion provided above the pot occupies a space having a flat vertical cross-sectional shape, and covers a wide area. This permits the steam suction portion to suck in the generated steam evenly.
According to the present invention, with the steam generating device constructed as described above, steam is fed to an outer circulation passage through which gas inside a heating chamber is sucked in and is then returned to the heating chamber. Thus, even in a case where there is a limit to the electric power consumption, it is possible to provide a sufficient amount of steam to perform cooking. Moreover, since the steam generating device is arranged with one flat side of the pot parallel to a side wall of the heating chamber, it does not occupy an unduly large space inside the cabinet of the steam cooking apparatus; thus, the space inside the cabinet can be used more efficiently. Furthermore, the outer circulation passage is connected to a sub-cavity provided adjacent to the heating chamber, and the steam flowing through the outer circulation passage into the sub-cavity is heated by heating means provided in the sub-cavity, and is then fed to the heating chamber. This makes it easy to turn steam into superheated steam and perform cooking by use of it.

### Brief Description of Drawings

[FIG. 1] A perspective view showing the exterior of a steam cooking apparatus.
[FIG. 2] A perspective view showing the exterior of the steam cooking apparatus, with a door to a heating chamber opened.
[FIG. 3] A front view of the steam cooking apparatus, with the door to the heating chamber removed.
[FIG. 4] A diagram illustrating the basic construction of an internal mechanism of the steam cooking apparatus.
[FIG. 5] A diagram illustrating the basic construction of the internal mechanism of the steam cooking apparatus, as viewed from a direction perpendicular to FIG. 4.
[FIG. 6] A top view of the heating chamber.

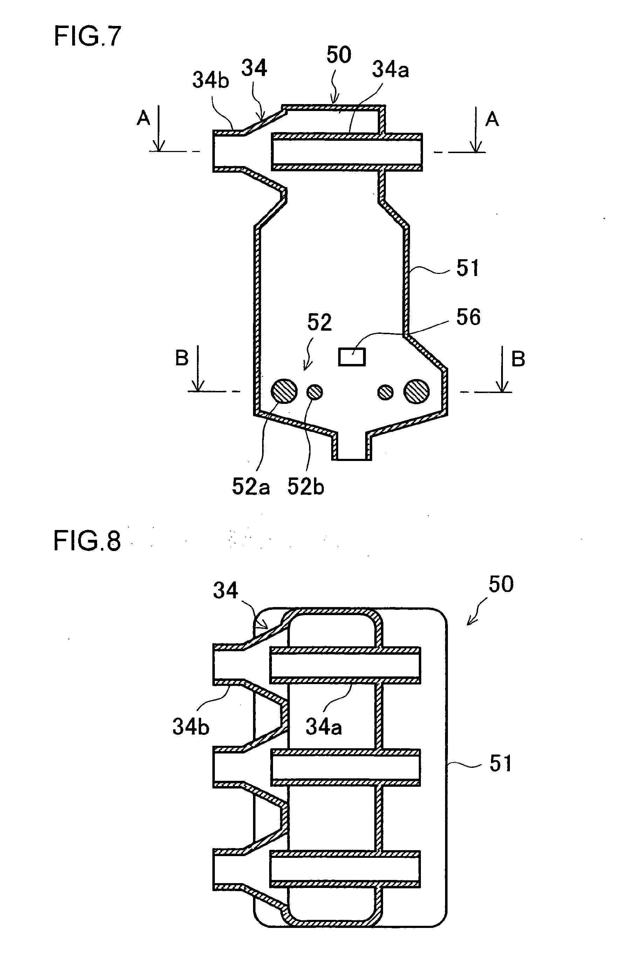

[FIG. 7] A vertical sectional view of a steam generating device.
[FIG. 8] A horizontal sectional view taken on the line A-A of FIG. 7.
[FIG. 9] A horizontal sectional view taken on the line B-B of FIG. 7.
[FIG. 10] A front view of the steam generating device.
[FIG. 11] A vertical sectional view of a blowing device.
[FIG. 12] A top view of a floor panel of a sub-cavity.
[FIG. 13] A block diagram of a control portion.
[FIG. 14] A diagram similar to FIG. 4, showing the basic construction in a state different from that shown in FIG. 4.
[FIG. 15] A diagram similar to FIG. 5, showing the basic construction in a state different from that shown in FIG. 5.
[FIG. 16] A diagram conceptually showing the combinational structure of a pot and a steam suction portion.

### List of Reference Symbols

- 1: steam cooking apparatus
- 20: heating chamber
- 25: blowing device
- 30: outer circulation passage
- 34: steam suction ejector
- 40: sub-cavity
- 41: vapor heating heater
- 50: steam generating device
- 51: pot
- 52: steam generating heater
- F: food

### Best Mode for Carrying Out the Invention

Hereinafter, an embodiment of the present invention will be described with reference to the accompanying drawings.

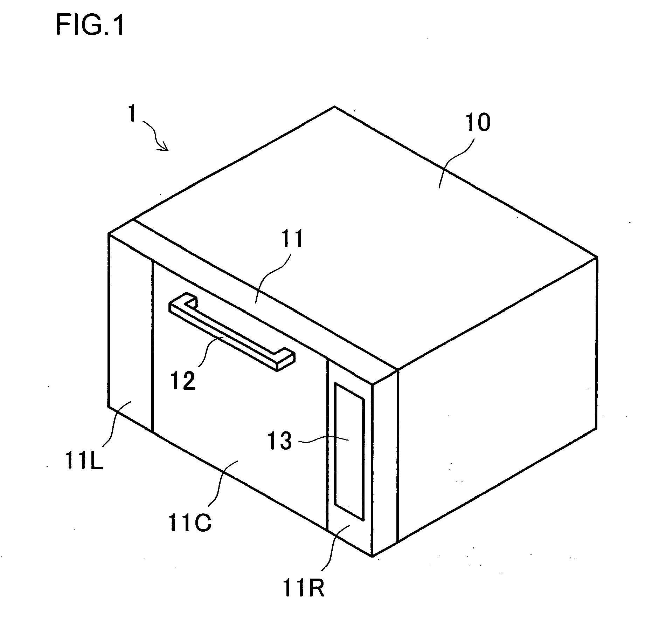

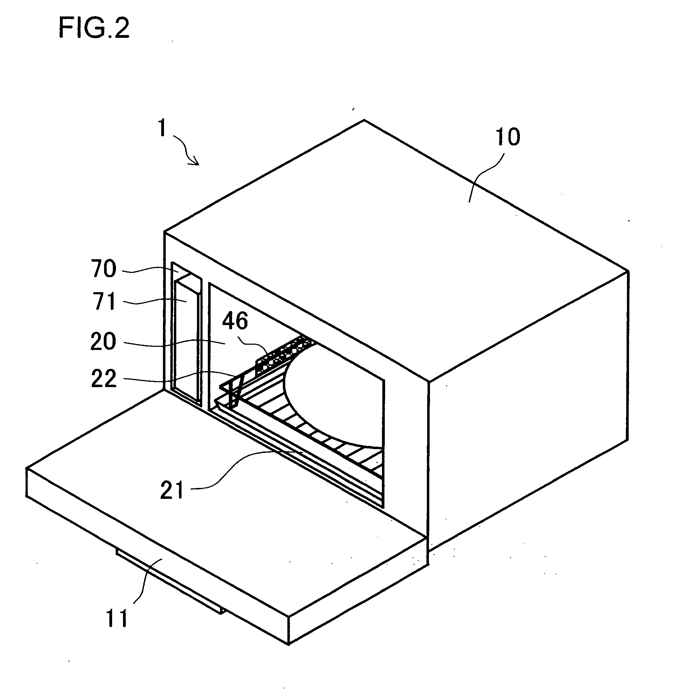

A steam cooking apparatus 1 has a cabinet 10 in a shape of a rectangular parallelepiped. On a front face of the cabinet 10, a door 11 is provided. The door 11 rotates about a bottom edge thereof in a vertical plane. When a handle 12 fitted in an upper part of the door 11 is held and pulled frontward, the door 11 changes its position through 90 degrees from a vertical, closed state shown in FIG. 1 to a horizontal, opened state shown in FIG. 2. A middle part 11C of the door 11 has a pane of heat-resistant glass set therein to form a see-through part. On the left and right of the middle part 11C, a left-side part 11L and a right-side part 11R, each finished with a metal decoration plate, are arranged symmetrically. On the right-side part 11 R, an operation panel 13 is provided.

When the door 11 is opened, the front face of the cabinet 10 appears. In the part of the cabinet 10 corresponding to the middle part 11C of the door 11, a heating chamber 20 is provided. In the part of the cabinet 10 corresponding to the left-side part 11L of the door 11, a water tank chamber 70 is provided. In the part of the cabinet 10 corresponding to the right-side part 11R of the door 11, a control circuit board is arranged inside, with no opening provided in front thereof.

The heating chamber 20 has a shape of a rectangular parallelepiped, and is completely open in the front face thereof at which it faces the door 11. The other faces of the heating chamber 20 are formed of stainless steel plates. Around the heating chamber 20, heat insulation is applied. On a floor surface of the heating chamber 20, a tray 21 formed of a stainless steel plate is placed, and, above the tray 21, a rack 22 formed of stainless steel wire is placed for placing food F thereon.

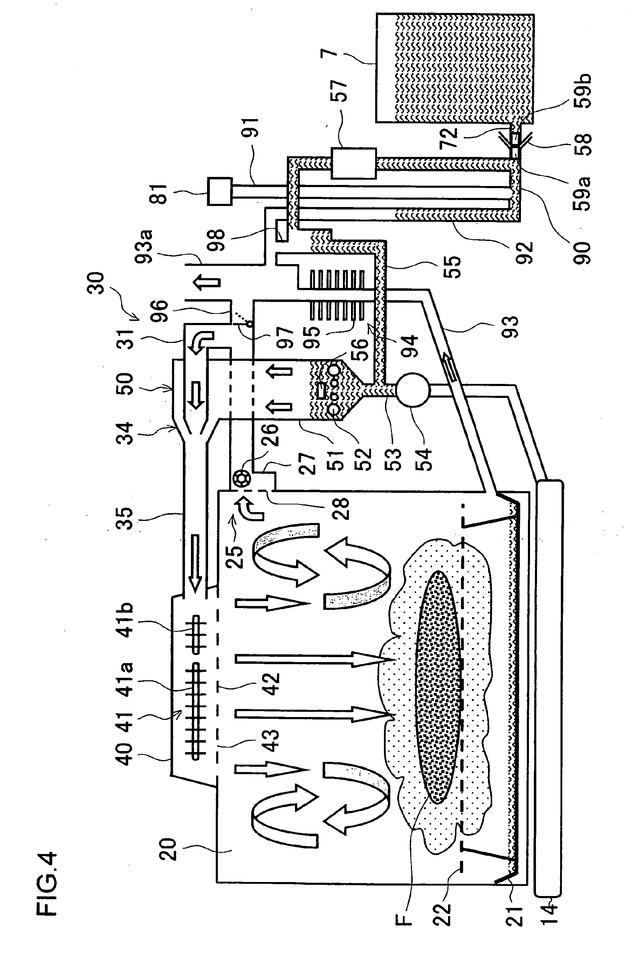

Inside the heating chamber 20, steam is present that is circulated through an outer circulation passage 30 shown in FIG. 4 (initially, inside the heating chamber 20, air is dominant; when steam cooking is started, however, the air is gradually replaced with steam; throughout the following description, it is assumed that the gas inside the heating chamber 20 has completely been replaced with steam).

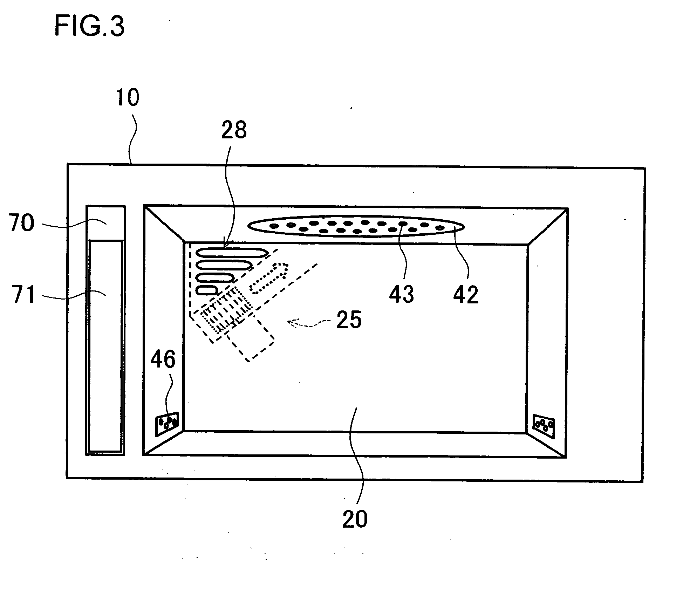

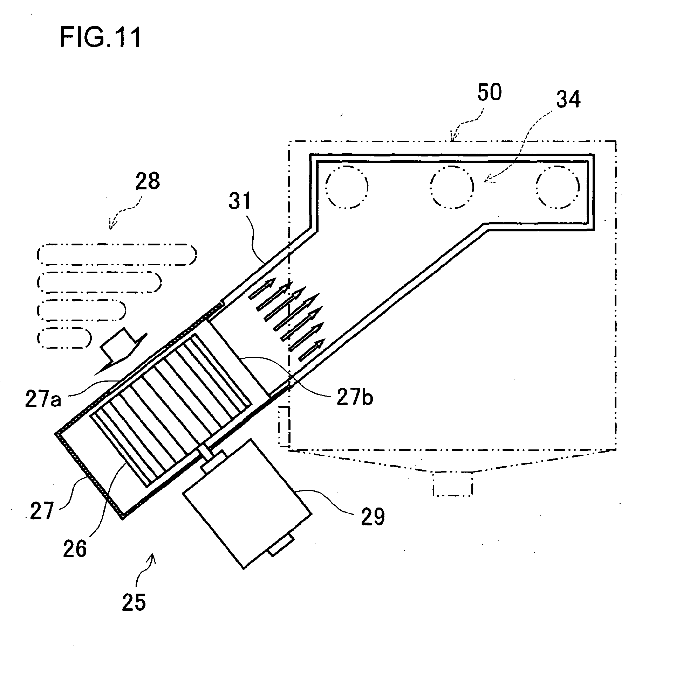

The outer circulation passage 30 starts with a suction port 28 provided in a corner of an upper part of a rear wall of the heating chamber 20. In this embodiment, as shown in FIG. 3, the suction port 28 is arranged in the upper left corner of the rear wall. The suction port 28 consists of a plurality of parallel slits arranged above one another. These slits are increasingly long upward and increasingly short downward so that together they form an opening in the shape of a right-angled triangle (see FIG. 11). The right-angled corner of the triangle fits the corner of the rear wall of the heating chamber 20. Thus, the suction port 28 is increasingly widely open toward the upper edge of the rear wall of the heating chamber 20, and is increasingly widely open toward the left edge thereof.

The suction port 28 is followed by a blowing device 25 that produces an air stream that flows through the outer circulation passage 30. The blowing device 25 is arranged close to the outer surface of a side wall of the heating chamber 20. Selected as this side wall here is the rear wall of the heating chamber 20. As shown in FIG. 11, the blowing device 25 is provided with a centrifugal fan 26, a fan casing 27 for housing it, and a motor 29 for rotating the centrifugal fan 26. As the centrifugal fan 26, a sirocco fan can be used. As the motor 29, a direct current motor capable of high-speed rotation can be used. The fan casing 27 is fixed on the outer surface of the rear wall of the heating chamber 20, on the lower right of the suction port 28.

The fan casing 27 has a suction port 27a and an outlet port 27b. The outlet port 27b is directed in a specific direction. The meaning of this direction will be explained later.

Along the outer circulation passage 30, the blowing device 25 is followed by a steam generating device 50. The steam generating device 50 will be described in detail later. Like the blowing device 25, the steam generating device 50 is arranged close to the outer surface of the rear wall of the heating chamber 20; however, while the blowing device 25 is arranged rather in a left part of the heating chamber 20, the steam generating device 50 is arranged on the center line of the heating chamber 20.

The part of the outer circulation passage 30 leading from the outlet port 27b of the fan casing 27 to the steam generating device 50 is built with a duct 31; the part of the outer circulation passage 30 leading further on from the steam generating device 50 is built with a duct 35. The duct 35 is connected to a sub-cavity 40 provided adjacent to the heating chamber 20.

The sub-cavity 40 is provided above a ceiling part of the heating chamber 20 and, as seen in a plan view, above a central part of the ceiling part. The sub-cavity 40 has a circular shape as seen in a plan view, and, inside the sub-cavity 40, a vapor heating heater 41 is arranged as means for heating steam. The vapor heating heater 41 is composed of a main heater 41a and a sub heater 41b, of which each is built with a sheath heater. In the ceiling part of the heating chamber 20, an opening as large as the sub-cavity 40 is formed, and, in this opening, a floor panel 42 that forms a floor surface of the sub-cavity 40 is fitted.

In the floor panel 42, a plurality of upper jet holes 43 are formed. The upper jet holes 43 consist of small holes that are each directed straight downward and that are so located as to spread largely over the entire surface of the panel. Here, the upper jet holes 43 are so located as to spread within a plane, that is, two-dimensionally; it is, however, also possible to form elevations and depressions on the floor panel 42 so that the locations of the upper jet holes 43 spread quasi-three-dimensionally.

Both upper and lower surfaces of the floor panel 42 are finished to be dark-colored through surface treatment such as paining. Incidentally, the floor panel 42 may be formed of a metal material whose color grows dark as use progresses; instead, the floor panel 42 may be formed of a dark-colored ceramic molding.

Instead of the floor surface of the sub-cavity 40 being formed with the floor panel 42 separately provided, the ceiling plate of the heating chamber 20 may, as it is, be shared as the floor surface of the sub-cavity 40. In this case, the part of the ceiling plate corresponding to the sub-cavity 40 has the upper jet holes 43 formed therein, and has upper and lower surfaces thereof finished to be dark-colored.

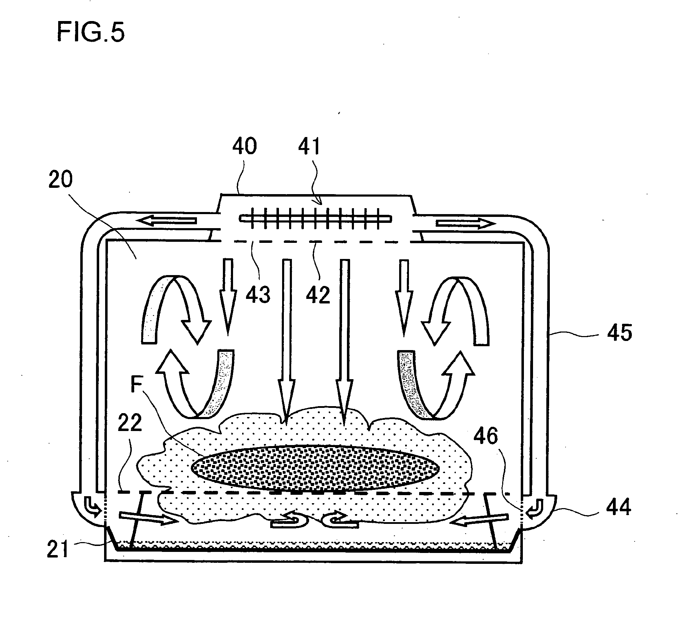

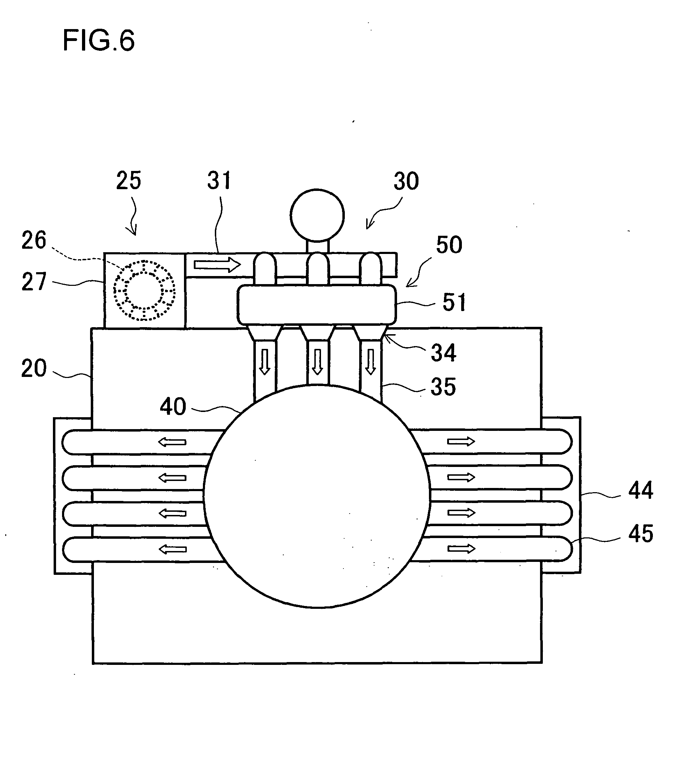

Outside the left and right side walls of the heating chamber 20, small sub-cavities 44 are provided as shown in FIG. 5. The sub-cavities 44 are connected to the sub-cavity 40 through ducts 45 to receive steam from the sub-cavity 40 (see FIGS. 5 and 6). The ducts 45 are formed as pipes having a circular cross-sectional shape, and are preferably formed of pipes of stainless steel.

In the lower parts of the side walls of the heating chamber 20, a plurality of side jet holes 46 are formed in positions corresponding to the sub-cavities 44. The side jet holes 46 are small holes that are each directed toward the food F placed inside the heating chamber 20, more precisely, toward under the food F. The side jet holes 46 permit steam to be jetted out therethrough toward the food F placed on the rack 22. The heights and directions of the side jet holes 46 are so set that the steam blown out reaches under the food F. Moreover, the side jet holes 46 are so positioned and/or directed that the steam blown out from the left and right sides meets under the food F.

The side jet holes 46 may be formed in a separately provided panel, or may be formed in the side walls of the heating chamber 20 themselves, with small holes formed directly therein. In this respect, what has been stated above in connection with the upper jet holes 43 equally applies. In contrast to the sub-cavity 40, however, the parts corresponding to the sub-cavities 44 need not be finished to be dark-colored.

The total area of the side jet holes 46 at the left and right sides is made larger than the total area of the upper jet holes 43. Since the side jet holes 46 thus have a large total area, a large amount of steam needs to be fed thereto. To achieve this, for each sub-cavity 44, a plurality of ducts 45 (in the figures, four of them) are provided.

Next, the structure of the steam generating device 50 will be described. The steam generating device 50 is provided with a barrel shape pot 51 arranged with the center line thereof vertical. The pot 51 is laterally compressed make a flat, elongate horizontal cross section, the shape of which is such as rectangular, oval, or the like. The pot 51 may be formed of any material so long as it is heat-resistant. Specifically, the pot 51 may be formed of a metal, synthetic resin, or ceramic, or may be formed of a combination of different materials.

As shown in FIG. 6, the steam generating device 50 is arranged with one flat side of the pot 51 parallel to the rear wall of the heating chamber 20. In this way, the steam generating device 50 can be arranged even in a case where there is only a narrow gap left between the outer surface of the heating chamber 20 and the inner surface of the cabinet 10. This helps reduce the just-mentioned gap and thereby make the cabinet 10 compact; thus, the space inside the cabinet 10 can be used more efficiently.

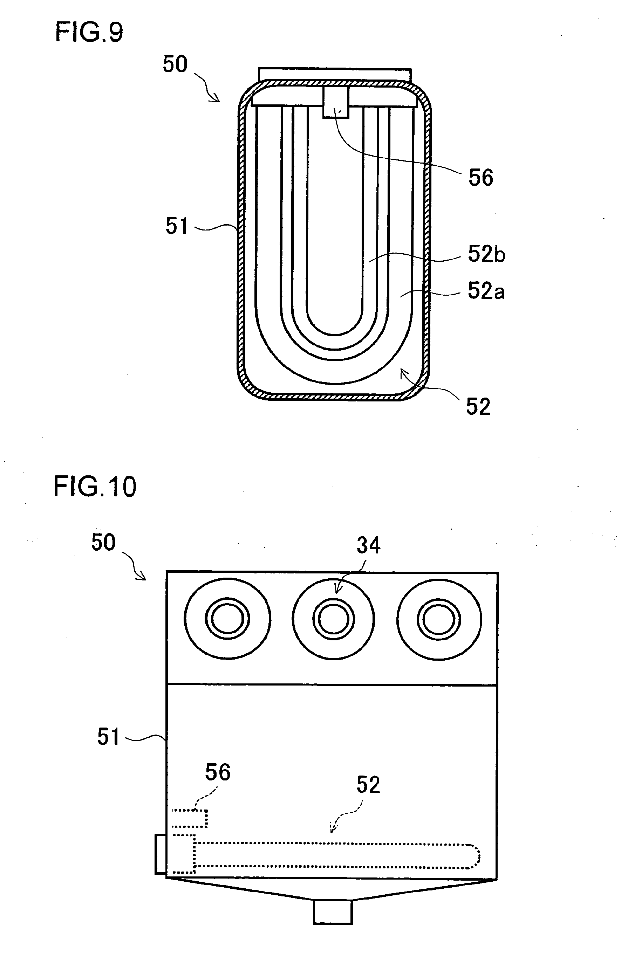

Water put in the pot 51 is heated with a steam generating heater 52 arranged in a bottom part of the pot 51. The steam generating heater 52 is built with a sheath heater, and is immersed in the water inside the pot 51 to directly heat it. As shown in FIG. 9, since the pot 51 is flat as seen in a plan view, the steam generating heater 52 is bent in a U shape, as seen in a plan view, to fit the inner surface of the pot 51. Like the vapor heating heater 41 provided in the sub-cavity 40, the steam generating heater 52 is composed of a main heater 52a and a sub heater 52b, with the former arranged outside and the latter inside. The main and sub heaters have different cross-sectional diameters, the main heater 52a being thicker than the sub heater 52b.

When arranging a sheath heater within a given area, as compared with arranging a sheath heater bent in a circular shape in a circular area, arranging a sheath heater bent in a flat shape like a U shape in a rectangular or oval area permits the sheath heater to be longer. That is, as compared with when a sheath heater bent in a circular shape is placed inside a pot having a circular cross-sectional shape, when a sheath heater bent in a flat shape like a U shape is placed inside a pot having an elongate horizontal cross-sectional shape, the ratio of the length of the sheath heater to a given amount of water is greater, thus the surface area of the sheath heater is larger, therefore more electric power can be used, and also heat is more easily conducted to water. Thus, with the steam generating device 50 of the embodiment, water can be heated quickly.

Above the pot 51, a steam suction portion is formed that permits steam to be sucked into the air stream circulating through the outer circulation passage 30. The steam suction portion is built with a steam suction ejector 34 that is formed to penetrate the pot 51 from one flat side to the opposite flat side. Here, as the steam suction ejector 34, three of them are arranged side by side, parallel to one another, at predetermined intervals, and at the same level.

Each steam suction ejector 34 is composed of an inner nozzle 34a and an outer nozzle 34b that surrounds the outlet end thereof. The steam suction ejector 34 extends in a direction in which it crosses the axis line of the pot 51. In this embodiment, the crossing angle is perpendicular, that is, the steam suction ejector 34 is arranged horizontally. To the inner nozzle 34a, the duct 31 is connected and, to the outer nozzle 34b, the duct 35 is connected. The steam suction ejector 34 is arranged at approximately the same height as the sub-cavity 40, and the duct 35 extends approximately horizontally. Connecting the steam suction portion and the sub-cavity 40 rectilinearly with the horizontal duct 35 in this way helps minimize the path of the part of the outer circulation passage 30 leading further on from the steam suction portion.

Having passed through the steam generating device 50, the outer circulation passage 30 divides into three paths through the three steam suction ejectors 34 and the ducts 35 following them. Thus, the pressure loss across the paths is reduced, the amount of steam circulated can be increased, and the steam can be quickly mixed with the gas flowing through the outer circulation passage 30.

As described above, the three steam suction ejectors 34 provided above the pot 51 form a steam suction portion that occupies a space having a flat vertical cross-sectional shape, and cover a wide area. Thus, the area where suction of steam takes place is widened, the generated steam is sucked evenly, and the sucked steam is quickly sent out, further enhancing the steam generating performance of the steam generating device 50. Moreover, since the three steam suction ejectors 34 are arranged side by side at the same level, even in a case where there is no ample space in the height direction, a large amount of steam can be transported.

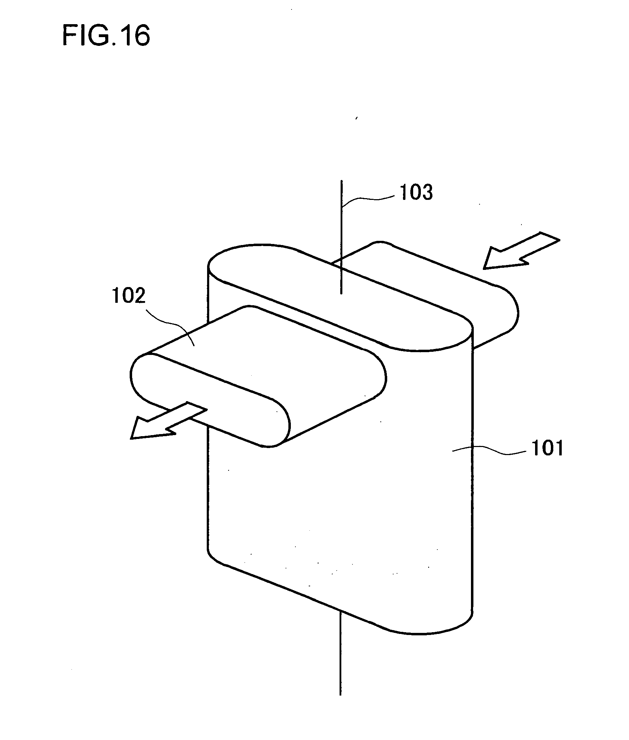

The pot 51 and the three steam suction ejectors 34 are combined in the manner as described above for achieving the structure conceptually shown in FIG. 16. In FIG. 16, reference numeral 101 represents a space occupied by the pot, the space being indicated by a cylindrical three-dimensional object having an oval cross-sectional shape, and reference numeral 102 represents a space occupied by the steam suction portion, the space being indicated by a cylindrical three-dimensional object having an oval cross-sectional shape. The space 101 occupied by the pot is arranged with the axis line 103 thereof vertical, and the outline thereof, as seen in a plan view, has a flat, elongate horizontal cross-sectional shape. Above the space 101 occupied by the pot, the space 102 occupied by the steam suction portion crosses the space 101 occupied by the pot. That is, above the space 101 occupied by the pot, the space 102 occupied by the steam suction portion extends in a direction in which it crosses the axis line 103. The space 102 occupied by the steam suction portion is here vertically compressed so that it has a flat vertical cross-sectional shape.

With this structure, the area where suction of steam takes place can be increased, and the steam generated with the pot can be sucked evenly. In the embodiment of the present invention, a "steam suction portion occupying a space having a flat vertical cross-sectional shape" is achieved by arranging three steam suction ejectors 34 side by side; however, even with a single steam suction ejector, a "steam suction portion occupying a space having a flat vertical cross-sectional shape" can be achieved so long as the single steam suction ejector is vertically compressed so as to have an elongate shape as seen from the front.

Now, the direction of the fan casing 27 of the blowing device 25 will be explained. The suction port 27a and the outlet port 27b of the fan casing 27 are at right angles to each other. The fan casing 27 is so positioned and angled that the outlet port 27b is directed toward the steam suction ejectors 34 that serve as a steam suction portion (see FIG. 11). Between the outlet port 27b and the steam suction ejector 34, the duct 31 provides an air passage, and, between the suction port 28 and the suction port 27a, an unillustrated duct provides an air passage.

With this construction, the gas sucked out through the suction port 28 reaches the steam suction ejector 34, taking the shortest air-blowing route offered by the centrifugal fan. This helps shorten the length of the outer circulation passage 30. This in turn reduces the pressure loss across the outer circulation passage 30 when air is blown therethrough and thereby enhances the energy efficiency of the outer circulation passage 30, and also reduces the heat-dissipating area of the outer circulation passage 30 and thereby reduces the heat loss. Altogether, the energy efficiency with which steam is circulated through the outer circulation passage 30 is enhanced.

As indicated by arrows shown in FIG. 11, the air stream blown out through the outlet port 27b flows at the highest speed at the center thereof, and flows at increasingly lower speed as it becomes closer to the inner surface of the duct 31. This is caused by the friction between the inner surface of the duct 31 and the gas. The part of the air stream that flows at the highest speed is directed toward the middle one of the three steam suction ejectors 34 arranged side by side. This helps establish a direct connection relationship between the middle steam suction ejector 34 and the outlet port 27b.

What is referred to as the "direct connection relationship" means that the air stream blown out through the outlet port 27b reaches the steam suction ejector 34 without straying from the route. Such a "direct connection relationship" is established not only for the middle steam suction ejector 34 but also for the steam suction ejectors 34 arranged on the left and right of the middle steam suction ejector 34. This is made possible by appropriately setting the width and angle of the part of the duct 31 where it is connected to the outlet port 27b. With this construction, the steam suction ejectors 34 suffer less from variation in the volume of air distributed thereto. Also, this permits the steam suction ejectors 34 to suck in the steam evenly from a wide area, enhancing the steam suction efficiency.

Back in FIG. 4, the pot 51 has a funnel-shaped bottom part, from which a water drain pipe 53 runs downward. Midway along the water drain pipe 53, a water drain valve 54 is provided. The water drain pipe 53 has a lower part thereof bent so as to run toward a lower part of the heating chamber 20 with a slope of a predetermined angle. Under the heating chamber 20, a water drain tank 14 is so arranged as to receive the lower end of the water drain pipe 53. The water drain tank 14 can be taken out of the cabinet 10 through the front face thereof so as to dispose of the water collected therein.

The pot 51 is fed with water through a water feed passage. The water feed passage is built with a water feed pipe 55 that connects a water tank 71 to the water drain pipe 53. The water feed pipe 55 is connected to the water drain pipe 53 at a position higher than the water drain valve 54. The water feed pipe 55, starting from the position where it is connected to the water drain pipe 53, first ascends and then descends to form an inverted U shape. Midway in the descending part of the water feed pipe 55, a water feed pump 57 is provided. The water feed pipe 55 leads to a laterally-facing funnel-shaped inlet port 58. A horizontal connection pipe 90 connects the water feed pipe 55 to the inlet port 58.

Inside the pot 51, a pot water level sensor 56 is arranged. The water level sensor is located slightly higher than the steam generating heater 52.

Into the water tank chamber 70, a water tank 71 in the shape of a rectangular parallelepiped having a small lateral width is inserted. From a bottom part of the water tank 71 runs a water feed pipe 72, which is connected to the inlet port 58.

When the water tank 71 is pulled out of the water tank chamber 70, the water feed pipe 72 disconnects from the inlet port 58, and thus, unless some measure is taken, the water inside the water tank 71 and the water in the water feed pipe 55 spills out. To prevent this, the inlet port 58 and the water feed pipe 72 are fitted with coupling plugs 59a and 59b. When the water feed pipe 72 is connected to the inlet port 58 as shown in FIG. 4, the coupling plugs 59a and 59b couple to each other to permit passage of water; when the water feed pipe 72 is disconnected from the inlet port 58, the coupling plugs 59a and 59b are each shut to prevent water from spilling out of the water feed pipe 55 and the water tank 71.

To the connection pipe 90 are connected, in order from the side of the inlet port 58, the water feed pipe 55, a pressure detection pipe 91, and a pressure release pipe 92. At the upper end of the pressure detection pipe 91, a water level sensor 81 is provided. The water level sensor 81 measures the water level inside the water tank 71. An upper part of the pressure release pipe 92 is horizontally bent, and is connected to an exhaust passage through which to let steam escape out of the heating chamber 20.

The exhaust passage is built with an exhaust duct 93 and a vessel 93a, of which the former forms a front part thereof and the latter a rear part. The exhaust duct 93 is longer than the vessel 93a. The exhaust duct 93 extends from a side wall of the heating chamber 20, and runs while gradually increasing its height to eventually lead to the vessel 93a. The vessel 93a leads out of the apparatus, i.e. out of the cabinet 10. The vessel 93a is formed of a synthetic resin, and has a larger cross-sectional area of the flow passage than that of the exhaust duct 93.

The entrance to the exhaust duct 93 is open toward the inside of the heating chamber 20. Thus, if there is any liquid flowing downward, in the direction opposite to the exhaustion direction, through the exhaust duct 93, it enters the heating chamber 20 and is collected at the bottom thereof. The liquid collected at the bottom of the heating chamber 20 can be checked at a glance, eliminating the possibility of it not being disposed of.

At least part of the exhaust duct 93 is formed into a heat dissipating portion 94. The heat dissipating portion 94 is built with a metal pipe having a plurality of radiating fins 95 on the outside thereof.

The vessel 93a passes by the duct 31. Here, between the duct 31 and the vessel 93a, a connection passage is provided. This connection passage is built with a connection duct 96, and, inside this connection duct 96, an electrically driven damper 97 is provided. Normally, the damper 97 keeps the connection duct 96 closed.

The highest part of the water feed pipe 55 leads, through an overflow water passage, to the vessel 93a. The overflow water passage is built with an overflow water pipe 98 of which one end is connected to the water feed pipe 55 and of which the other end is connected to the upper-end horizontal part of the pressure release pipe 92. The height of the position at which the pressure release pipe 92 is connected to the vessel 93a is the overflow level. The overflow level is set to be higher than the normal water level inside the pot 51 and lower than the steam suction ejector 34.

The vessel 93a is formed into a complex shape to receive various ducts and pipes such as the exhaust duct 93, the connection duct 96, and the overflow water pipe 98, but the vessel 93a itself is seamless because it is formed of a synthetic resin. This prevents the water from leaking out through the seam.

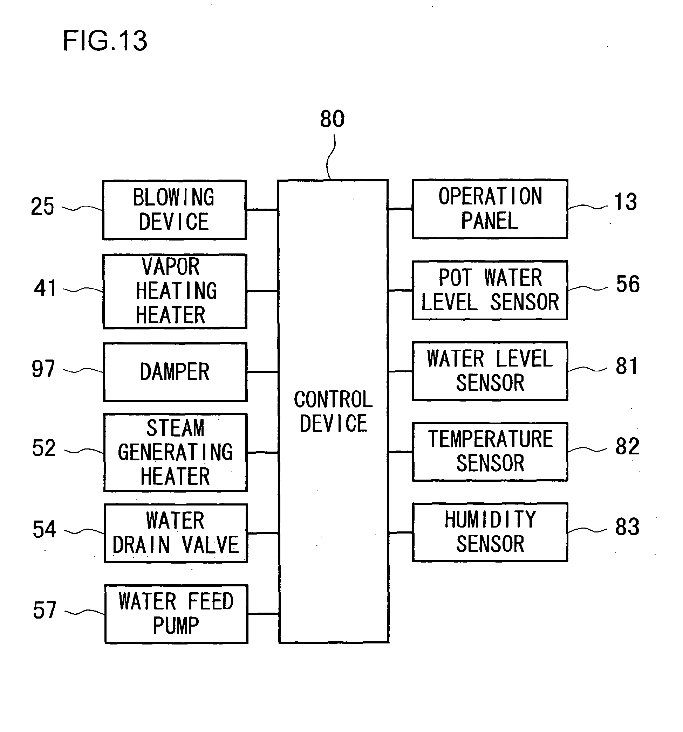

The operation of the steam cooking apparatus 1 is controlled by a control device 80 shown in FIG. 13. The control device 80 includes a microprocessor and a memory, and controls the steam cooking apparatus 1 according to a predetermined program. The status of control is indicated in a display portion on the operation panel 13. The control device 80 receives operation instructions from various operation keys arranged on the operation panel 13 as they are operated. On the operation panel 13, a sound generating device is also arranged that generates various sounds.

Connected to the control device 80 is not only the operation panel 13 but also the blowing device 25, the vapor heating heater 41, the damper 97, the steam generating heater 52, the water drain valve 54, the pot water level sensor 56, the water feed pump 57, and the water level sensor 81. Further connected to the control device 80 are: a temperature sensor 82 for sensing the temperature inside the heating chamber 20; and a humidity sensor 83 for sensing the humidity inside the heating chamber 20.

The steam cooking apparatus 1 is operated and operates as follows. First, the door 11 is opened, then the water tank 71 is pulled out of the water tank chamber 70, and then water is poured into the tank through an unillustrated water feed port thereof. Filled with water, the water tank 71 is then pushed back into the water tank chamber 70 and is set in position. When the end of the water feed pipe 72 is confirmed to have been securely connected to the inlet port 58 of the water feed passage, food F is placed inside the heating chamber 20, and the door 11 is closed. Then, a power key on the operation panel 13 is pressed to turn the power on, and the operation keys provided on the operation panel 13 are operated to select a cooking menu and make various settings.

When the water feed pipe 72 is connected to the inlet port 58, the water tank 71 leads to the pressure detection pipe 91, and the water level sensor 81 detects the water level inside the water tank 71. If the water amount is found to be sufficient to execute the selected cooking menu, the control device 80 starts to generate steam; if the amount of water inside the water tank 71 is found to be insufficient to execute the selected cooking menu, the control device 80 indicates the corresponding warning on the operation panel 13. In this case, the control device 80 does not start to generate steam until the shortage of water is overcome.

When it becomes possible to start to generate steam, the water feed pump 57 starts to operate, and starts to feed water to the steam generating device 50. At this point, the water drain valve 54 is closed.

Water collects inside the pot 51 from the bottom up. When the water level is detected to have reached a predetermined level by the pot water level sensor 56, water stops being supplied. Now, electric power starts to be supplied to the steam generating heater 52. The steam generating heater 52 heats the water inside the pot 51 directly.

At the same time that electric power starts to be supplied to the steam generating heater 52, or when the water inside the pot 51 is found to have reached a predetermined temperature, electric power starts to be supplied also to the blowing device 25 and the vapor heating heater 41. The blowing device 25 sucks in, though the suction port 28, the steam in the heating chamber 20, and blows it out into the steam generating device 50. Here, since the blowing out of steam is achieved with the centrifugal fan 26, a higher pressure can be produced than with a propeller fan. In addition, since the centrifugal fan 26 is rotated at a high speed with a direct current motor, the air stream produced has an extremely high flow speed.

The high flow speed of the air stream here helps reduce the cross-sectional area of the flow passage in comparison with the flow rate. This permits the pipe that largely forms the outer circulation passage 30 to have a circular cross-sectional shape and a comparatively small diameter, and thus helps give the outer circulation passage 30 a smaller surface area than when it is formed as a duct having a rectangular cross-sectional shape. Thus, although hot steam passes through it, the outer circulation passage 30 dissipates less heat, enhancing the energy efficiency of the steam cooking apparatus 1. In a case where the outer circulation passage 30 is wrapped with a heat insulating material, the amount of it needed can be reduced.

At this point, the damper 97 keeps closed the duct 96 leading from the duct 31 to the vessel 93a. The steam blown out of the blowing device 25 under pressure flows through the duct 31 into the steam suction ejector 34, then flows through the duct 35 into the sub-cavity 40.

When the water in the pot 51 boils, it generates saturated steam at 100 °C and at one atmosphere. The saturated steam enters, through the steam suction ejector 34, the outer circulation passage 30. The ejector structure here permits the saturated steam to be sucked in quickly and mixed with the circulated air stream. Moreover, the ejector structure prevents the steam generating device 50 from being acted upon by a pressure, and thereby permits the saturated steam to be discharged freely.

The steam that has exited from the steam suction ejector 34 flows through the duct 35 into the sub-cavity 40. The steam,that has entered the sub-cavity 40 is heated to 300 °C by the vapor heating heater 41, and is thus turned into superheated steam. Part of the superheated steam is jetted out downward through the upper jet holes 43. Another part of the superheated steam flows through the ducts 45 into the sub-cavities 44, and is then jetted out sideways through the side jet holes 46.

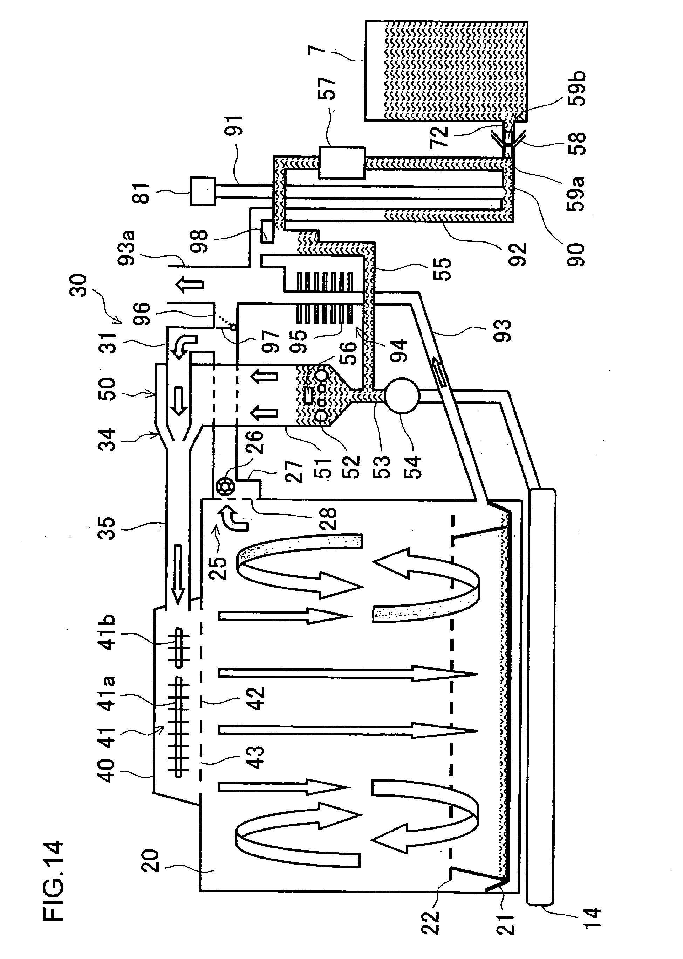

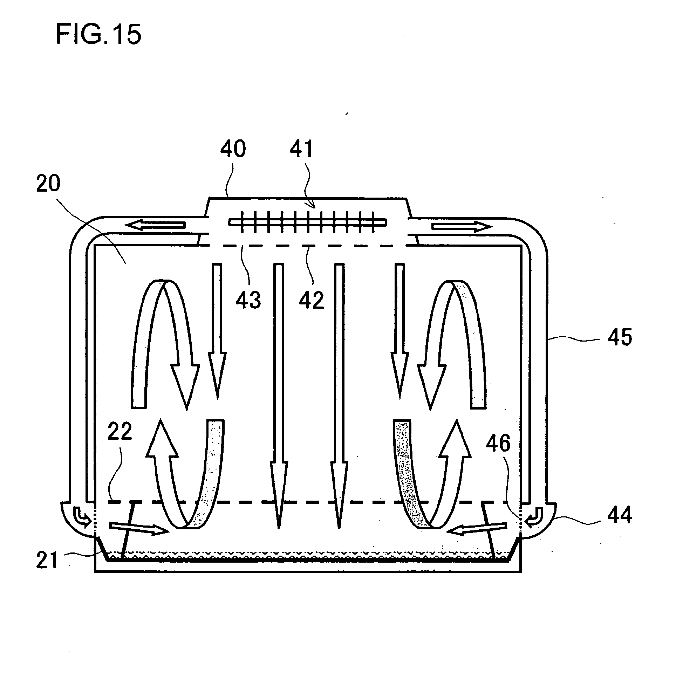

FIGS. 14 and 15 show the streams of steam as observed when no food F is placed inside the heating chamber 20. Through the upper jet holes 43, steam is jetted out downward so strongly as to reach the floor surface of the heating chamber 20. The steam hits the floor surface and changes its flow direction outward. The steam thus moves out of the downward blow and starts to rise. Since steam, in particular superheated steam, is light, this turning of the flow direction occurs naturally. Consequently, inside the heating chamber 20, convection occurs with a descending stream at the center and an ascending stream around, as indicated by arrows in the figure.

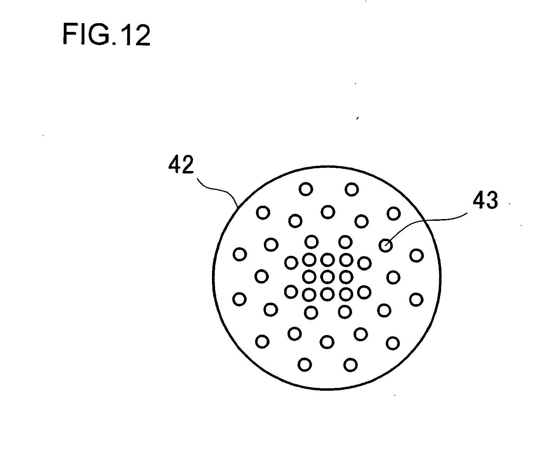

To produce effective convection, the upper jet holes 43 are arranged ingeniously. Specifically, as shown in FIG. 12, the upper jet holes 43 are so arranged as to be dense in a central part of the floor panel 42 and sparse in a peripheral part thereof. This weakens the strength of the downward blow of steam in the peripheral part of the floor panel 42 so as not to hamper the rise of steam, and thus helps produce more effective convection.

Through the side jet holes 46, steam is jetted out sideways. The steam meets in a central part of the heating chamber 20, and then enters the convection produced by the steam from the upper jet holes 43. The steam flowing by convection is sequentially sucked out through the suction port 28. The steam then circulates through the outer circulation passage 30 to the sub-cavity 40, and then returns to the heating chamber 20. In this way, the steam inside the heating chamber 20 repeatedly flows out into the outer circulation passage 30 and then back into the heating chamber 20.

When food F is placed inside the heating chamber 20, the superheated steam heated to about 300 °C and jetted out through the upper jet holes 43 hits the food F and delivers heat thereto. In this process, the temperature of the steam drops to about 250 °C. The superheated steam that has touched the surface of the food F condenses on the surface of the food F and thereby releases latent heat. This too heats the food F.

As shown in FIGS. 4 and 5, after delivering heat to the food F, the steam changes its direction outward and moves out of the downward blow. Since steam is light as described previously, having moved out of the downward blow, the steam starts to rise, producing convection inside the heating chamber 20 as indicated by arrows. This convection maintains the temperature inside the heating chamber 20, and keeps the food F hit by the superheated steam just heated in the sub-cavity 40, permitting a large amount of heat to be applied quickly to the food F.

The steam jetted out sideways through the side jet holes 46 reaches, from the left and right sides, under the rack 22 and meets under the food F. Although the steam jetted out through the side jet holes 46 is directed originally in directions tangential to the surface of the food F, as a result of the steam from the left and right sides meeting, it does not flow straight on, but stagnates and fills under the food F. The steam thus behaves as if blown in directions normal to the surface of the food F. This ensures that the heat of steam is delivered to the lower part of the food F.

As described above, with the steam from the side jet holes 46, the part of the food F that is not hit by the steam from the upper jet holes 43 is as well cooked as the upper part. This contributes to an evenly-cooked, neat-looking result. Moreover, the food F receives heat evenly from around the surface thereof. Thus, the food F is heated to its center sufficiently in a short time.

The steam from the side jet holes 46, too, originally has a temperature of about 300 °C, and, after it hits the food F, its temperature drops to about 250 °C, during which process the steam delivers heat to the food F. Moreover, when the steam condenses on the surface of the food F, it releases latent heat, and thereby heats the food F.

After delivering heat to the lower part of the food F, the steam from the side jet holes 46 enters the convection produced by the steam from the upper jet holes 43. The steam flowing by convection is sequentially sucked out through the suction port 28. The steam then circulates through the outer circulation passage 30 to the sub-cavity 40, and then returns to the heating chamber 20. In this way, the steam inside the heating chamber 20 repeatedly flows out into the outer circulation passage 30 and then back into the heating chamber 20.

As time passes, the amount of steam inside the heating chamber 20 increases. Excessive steam is exhausted out of the apparatus through the exhaust passage. If the steam is exhausted, as it is, outside the cabinet 10, steam condensation occurs on wall surfaces around, leading to growth of mold. However, since the heat dissipating portion 94 is provided midway along the exhaust duct 93, while the steam is passing therethrough, it is deprived of its heat and condenses on the inner surface of the exhaust duct 93. Thus, only a negligible amount of steam escapes out of the cabinet 10, and therefore no serious problems result. The water produced through condensation on the inner surface of the exhaust duct 93 flows downward, in the direction opposite to the exhaustion direction, and enters the heating chamber 20. This water can be disposed of, along with the water otherwise collected in the tray 21.

The cross-sectional area of the flow passage of the vessel 93a leading out of the apparatus is made large, and thus helps reduce the speed at which the steam is exhausted out therethrough. This prevents what is located around the apparatus from being hit by the steam with great force and being damaged.

The side jet holes 46 are located away from the sub-cavity 40, and, as compared with the upper jet holes 43, are therefore located disadvantageously from the perspective of jetting out steam. Nevertheless, as a result of the total area of the left and right side jet holes 46 being larger than the total area of the upper jet holes 43, a sufficient amount of steam can be guided to the side jet holes 46, permitting the upper and lower parts of the food F to be heated more evenly.

Since the food F is heated while the steam inside the heating chamber 20 is circulated, the steam cooking apparatus 1 operates with high energy efficiency. Moreover, since the superheated steam from above is jetted out downward through the plurality of upper jet holes 43 that are so located as to spread largely over the entire floor panel 42 of the sub-cavity 40, largely the entire food F is enveloped in the steam from above. As a result of superheated steam hitting the food F, and this hitting taking place over a large area, the heat of superheated steam is quickly and efficiently delivered to the food F. Moreover, as a result of the steam having entered the sub-cavity 40 being heated by the vapor heating heater 41 and thus expanding, the steam is jetted out with increased strength, and thus hits the food F at an increased speed. This permits the food F to be heated further quickly.

The centrifugal fan 26 can generate a pressure higher than a propeller fan can, and thus helps increase the strength with which steam is jetted out through the upper jet holes 43. This permits superheated steam to be jetted out so strongly as to reach the floor surface of the heating chamber 20, and thus permits the food F to be heated intensely. The centrifugal fan 26 is rotated at a high speed with a direct current motor to produce a strong steam. This helps enhance the benefits mentioned above.

Moreover, the strong blowing power of the blowing device 25 greatly helps to achieve quick exhaustion of gas through an exhaust port 32 when the door 11 is opened to take out the food F.

Since the floor panel 42 of the sub-cavity 40 is dark-colored on the upper surface thereof, it absorbs well the heat radiated from the vapor heating heater 41. The radiated heat absorbed by the floor panel 42 is then radiated, from the equally dark-colored lower surface of the floor panel 42, into the heating chamber 20. This reduces the rise in the temperature inside and on the outer surface of the sub-cavity 40, enhancing safety. Moreover, as a result of the heat radiated from the vapor heating heater 41 being conducted through the floor panel 42 to the heating chamber 20, the heating chamber 20 is heated more efficiently. The floor panel 42 may have a circular shape as viewed in a plan view, or may have a rectangular shape geometrically similar to the heating chamber 20 as viewed in a plan view. As described previously, the ceiling wall of the heating chamber 20 may be shared as the floor panel of the sub-cavity 40.

In a case where the food F is, for example, meat or the like, as its temperature rises, melted fat may drip down therefrom. In a case where the food F is a liquid put in a container, when it boils, part of it may boil over. Anything that drips down or boils over in such a way is collected in the tray 21, so as to be disposed of after the completion of cooking.

As the steam generating device 50 continues generating steam, the water level inside the pot 51 falls. When the pot water level sensor 56 detects that the water level has fallen to a predetermined level, the control device 80 restarts the operation of the water feed pump 57. The water feed pump 57 sucks up water from the water tank 71 to replenish the pot 51 with as much water as has evaporated. When the pot water level sensor 56 detects that the water level inside the pot 51 has risen back to a predetermined level, the control device 80 stops the operation of the water feed pump 57.

Due to the failure of the pot water level sensor 56 or the water feed pump 57, or for other causes, if the water feed pump 57 fails to stop its operation, the water level inside the pot 51 continues to rise beyond the predetermined level. When the water level reaches the overflow level, the water fed from the water feed pump 57 overflows through the overflow water pipe 98 into the vessel 93a, then flows into the exhaust duct 93. Thus, it does not occur that the water inside the pot 51 flows through the steam suction ejector 34 into the outer circulation passage 30. The water that has entered the exhaust duct 93 flows into the heating chamber 20.

Since the vessel 93a is so formed as to have a large cross-sectional area of the flow passage, it can hold a comparatively large amount of water. This permits, even in a case where a large amount of water overflows, the vessel 93a to receive it easily and drain it gradually through the exhaust duct 93.

On completion of cooking, the control device 80 indicates a corresponding message on the operation panel 13 and sounds an alert. Notified of the completion of cooking with these message and alert, the user opens the door 11, and takes the food F out of the heating chamber 20.

When the door 11 starts to be opened, the control device 80 switches the damper 97 into a state in which it opens the duct 96. Now, the air stream flowing through the outer circulation passage 30 flows through the duct 96 to the vessel 93a, and thus almost no part of it flows to the steam generating device 50. This reduces the amount of steam that flows into the sub-cavity 40, and thus now the jetting out, if ever, of steam through the upper jet holes 43 and the side jet holes 46 is extremely weak. This permits the user to take out the food F safely without being hit with steam and burnt on the face, hand, or other part of the body. As long as the door 11 is open, the damper 97 keeps the duct 96 open.

No circulation of steam has thus been conducted through the duct 96 and the vessel 93a, and accordingly these are not so hot as the outer circulation passage 30. Thus, the steam that has flown from the outer circulation passage 30 into the duct 96 and the vessel 93a condenses when it makes contact with the inner wall thereof. The condensed water flows down through the duct 93 and enters the heating chamber 20. This water can be disposed of, along with the water otherwise collected at the bottom of the heating chamber 20, after the completion of cooking.

Since the vessel 93a is so formed as to have a large cross-sectional area of the flow passage, it has a larger inner surface area. This permits a substantial part of the steam that has flown through the duct 96 into the vessel 93a to condense on the inner surface thereof, reducing the amount of steam to be exhausted out therethrough.

If the blowing device 25 is started all over from a resting state to achieve exhaustion, a time lag arises until it reaches a steadily blowing state. In this embodiment, the blowing device 25 is already operating, and thus no time lag arises. Moreover, the air stream that has thus far been circulating through the heating chamber 20 and the outer circulation passage 30 becomes, as it is, the air stream exhausted out through the vessel 93a. Thus, no time lag arises even for changing the direction of the air stream. This makes it possible to quickly exhaust the steam inside the heating chamber 20 and thereby to shorten the time for which the door 11 needs to be kept inhibited from being opened.

When the user starts to open the door 11, this condition can be recognized by the control device 80, for example, in the following manner. A latch for keeping the door 11 closed is provided between the cabinet 10 and the door 11, and a latch lever for unlocking the latch is provided on the handle 12 so as to be exposed out of it. A switch that opens and closes as the latch or the latch lever is operated is arranged inside the door 11 or the handle 12 so that, when the user grips the handle 12 and the latch lever to unlock, the switch transmits a signal to the control device 80.

In this embodiment, the steam inside the heating chamber 20 is passed through the outer circulation passage 30 and then through the sub-cavity 40 back into the heating chamber 20. Needless to say, any other configuration may be adopted. For example, the sub-cavity 40 may be kept fed with fresh steam while the steam overflowing out of the heating chamber 20 is kept discharged through the exhaust passage.

Obviously, many modifications and variations of the present invention are possible in light of the above teachings. It is therefore to be understood that within the scope of the appended claims, the invention may be practiced other than as specifically described.

### Industrial Applicability

The present invention finds application in cooking apparatuses in general that perform cooking by the use of steam, irrespective of whether they are for household use or business use.

## Claims

1. A steam generating device comprising:
(a) a barrel shape pot having a flat, elongate horizontal cross section;
(b) a heater arranged in a bottom part of the pot; and
(c) a steam suction portion that extends, above the pot, in a direction in which the steam suction portion crosses an axis line of the pot, and that occupies a space having a flat vertical cross-sectional shape.

2. The steam generating device of claim 1, wherein
the heater is built with a sheath heater that is immersed in water inside the pot.

3. The steam generating device of claim 1, wherein
the steam suction portion is built with a plurality of steam suction ejectors that are each formed to penetrate the pot from one flat side to an opposite flat side.

4. The steam generating device of claim 3, wherein
the plurality of steam suction ejectors are arranged side by side at a same level.

5. A steam cooking apparatus comprising:
(a) a heating chamber in which food is placed;
(b) an outer circulation passage through which gas inside the heating chamber is sucked in and is then returned to the heating chamber; and
(c) the steam generating device of one of claims 1 to 4 that feeds steam, through the steam suction portion, to the outer circulation passage.

6. The steam cooking apparatus of claim 5, wherein
the steam generating device is the steam generating device of claim 3, and
the outer circulation passage divides into a plurality of paths through the corresponding steam suction ejectors.

7. The steam cooking apparatus of claim 5, wherein
the steam generating device is the steam generating device of claim 4, and
the outer circulation passage divides into a plurality of paths through the corresponding steam suction ejectors.

8. The steam cooking apparatus of claim 5, wherein
the steam generating device is arranged with one flat side of the pot parallel to a side wall of the heating chamber.

9. The steam cooking apparatus of claim 5, wherein
the outer circulation passage is connected to a sub-cavity provided adjacent to the heating chamber, and
the steam flowing through the outer circulation passage into the sub-cavity is heated by heating means provided in the sub-cavity, and is then fed to the heating chamber.
